# EUROPÄISCHE PATENTSCHRIFT

(11) **EP 0 631 211 B1**
(45) Veröffentlichungstag und Bekanntmachung des Hinweises auf die Patenterteilung: **13.06.2001**
(21) Anmeldenummer: 94107461.9
(22) Anmeldetag: 13.05.1994
(51) Int. Cl.: G05B 19/18

(54) **Verfahren für die Feinbearbeitung von Verzahnungen**
Method for gear finishing
Méthode pour l'usinage en finition des engrenages

(30) Priorität: 26.05.1993 DE 4317306
(43) Veröffentlichungstag der Anmeldung: 28.12.1994
(73) Patentinhaber: Kapp GmbH & Co KG, Werkzeugmaschinenfabrik, D-96450 Coburg (DE)
(72) Erfinder: Lorenz, Manfred, Dipl.-Ing., D-96450 Coburg (DE)
(74) Vertreter: Stenger, Watzke & Ring Patentanwälte

(56) Entgegenhaltungen:
- EP-A- 0 472 903
- EP-A- 0 496 004
- EP-A- 0 593 760
- EP-A- 0 609 724
- DE-A- 3 730 249
- US-A- 3 708 925
- PATENT ABSTRACTS OF JAPAN vol. 16, no. 510 (M-1328), 21.Oktober 1992 & JP-A-04 189418 (IWASAKI HIDEKI), 7.Juli 1992,
- PATENT ABSTRACTS OF JAPAN vol. 15, no. 279 (M-1136), 16.Juli 1991 & JP-A-03 098713 (HOSOYA NORIO), 24.April 1991,

## Beschreibung

Die Erfindung betrifft ein Verfahren für die Feinbearbeitung von Verzahnungen auf einer Werkzeugmaschine, wobei das zu bearbeitende Zahnrad um seine Drehachse rotiert und sich mit einem Abrasivwerkzeug, das um seine Drehachse rotiert, im Eingriff befindet, wodurch es zum Spanabtrag an den zu bearbeitenden Zahnflanken des Zahnrads kommt, und wobei die Drehbewegung der Drehachse des Zahnrads und die Drehbewegung der Drehachse des Abrasivwerkzeuges elektronisch gekoppelt sind. Der Spanabtrag erfolgt üblicherweise dadurch, daß die Drehachsen einerseits des Werkstückes und andererseits des Abrasivwerkzeuges relativ zueinander unter einem sogenannten Achskreuzwinkel verlaufen. In Ausnahmefällen kann auch bei parallelen Achsen von Werkzeug und Werkstück ein Spanabtrag aufgrund des sogenannten Höhengleitens beim Abwälzen der Zahnflanken von Werkzeug und Werkstück aufeinander erfolgen.

Für die Hartbearbeitung von Zahnrädern sind verschiedene Fertigungsverfahren im Einsatz. Häufig werden wälzgefräste und gehärtete Zahnräder durch einen Schleifbearbeitungsvorgang mit der exakten Profilkontur (Evolvente) versehen. Manchmal wird dem Schleifbearbeitungsvorgang ein Zahnradhonverfahren nachgeschaltet, um unter anderem noch nach dem Schleifen verbliebene Verzahnungsfehler zu minimieren. Der Vorteil des Honens ist, daß der Prozeß nur relativ wenig Zeit in Anspruch nimmt und sich daher besonders für die Großserienproduktion eignet.

Beim Zahnradhonen rotiert das zu bearbeitende Zahnrad um seine Drehachse. Dabei kämmt es mit einem Honwerkzeug, das - im Falle einer zu bearbeitenden Außenverzahnung - die Form eines innenverzahnten Ringes hat; das Honwerkzeug rotiert ebenfalls um seine Drehachse. Die Innenverzahnung des Honwerkzeugs leitet sich geometrisch aus der gewünschten Werkstückverzahnungsgeometrie ab. Um Materialabtrag vom hart zu bearbeitenden Zahnrad zu bewerkstelligen, besteht das Honwerkzeug auch aus Abrasivpartikeln. Die Bearbeitung erfolgt, indem beispielsweise das Werkstück angetrieben wird und das Werkzeug mit einem gewissen Schleppmoment nachläuft. Durch Änderung der Drehrichtung werden beide Zahnflanken (Schub und Zug) bearbeitet.

Ziel des Honvorganges ist es, unter anderem nach dem Schleifen verbliebene Verzahnungsfehler zu minimieren. Hierzu gehören Fehler des Rundlaufs und des Profils (Evolvente samt der gewünschten Korrekturen) sowie der Flankenlinie. Weiterhin sind von besonderer Bedeutung für einen geräuscharmen Lauf des Zahnrads der Einzel- und der Summenteilungsfehler.

Aus der JP-A-04 189418 ist ein Verfahren zur Feinbearbeitung von Verzahnungen bekannt, bei dem die Fertigbearbeitung der Zahnräder dadurch erfolgt, daß ein Lehr-Zahnrad im gegenseitigen Eingriff mit dem zu bearbeitenden Zahnrad steht und eine Schleifeinrichtung teilweise in eine Arbeitsposition verfahren und wieder aus dieser herausverfahren wird, um die Zahnteilungsfehler des zu bearbeitenden Zahnrades zu beseitigen. Zur Durchführung dieses bekannten Fertigbearbeitungsverfahrens ist es somit notwendig, neben der Verwendung des Lehr-Zahnrades eine separate Schleifvorrichtung zu verwenden, um die beim Eingriff von Lehr-Zahnrad und zu bearbeitenden Zahnrad festgestellten Abweichungen zu beseitigen. Aufgrund dieser Ausgestaltung ist es mit dem bekannten Verfahren nicht möglich, zeitparallel zur Bearbeitung die Fehlererfassung durchzuführen, da für die Teilungsfehlererfassung eine Zusatzeinrichtung mit dem zu bearbeitenden Werkstück in Eingriff gebracht werden muß und somit eine Zeitparallelität zwischen Fehlererfassung und Bearbeitung nicht möglich ist.

Aus der EP-A-0 593 760 ist weiterhin ein System zum Ausgleich von Teilungsfehlern in Getriebezügel bekannt. Dieses bekannte System dient dazu, um bei in einer Maschine eingebauten Zahnrädern, beispielsweise einer Kegelradverzahnung, mögliche Verzahnungsfehler durch eine Korrektur der Einstellung der Zahnräder zueinander und somit der Wälzbewegung zueinander auszugleichen. Somit offenbart dieses bekannte System zwar die Erfassung von Teilungsfehlern bei einer Kegelradverzahnung, diese Teilungsfehler werden jedoch bei diesem bekannten System nicht durch eine Bearbeitung der Zahnräder behoben, sondern stattdessen wird versucht, durch eine Korrektur der Einstellung der Zahnräder zueinander diese Verzahnungsfehler auszugleichen, weshalb dieses bekannte System nicht als Bearbeitungsverfahren zur Beseitigung von Verzahnungsfehlern bei Zahnrädern anzusehen ist.

Aus der nachveröffentlichten EP-A-0 609 724 ist schließlich ein Verfahren zur Feinbearbeitung von Verzahnungen bekannt, bei dem das zu bearbeitende Zahnrad mit einem als Zahnrad ausgebildeten Abrasivwerkzeug im ständigen Eingriff steht, so daß beim Drehen des zu bearbeitenden Zahnrades über das Abrasivwerkzeug eine Bearbeitung des Zahnrades stattfindet. Bei diesem bekannten Verfahren ist es jedoch notwendig, daß eingesetzte Abrasivwerkzeuge während des kompletten Bearbeitungsvorgangs mehrfach gegen ein anderes Abrasivwerkzeug auszutauschen, um den vollständigen Verzahnungsfehler ausgleichen zu können. Die Verwendung verschiedener Abrasivwerkzeuge zur Komplettbearbeitung eines Zahnrades bedeutet nicht nur eine längere Bearbeitungsdauer, sondern auch höhere Preise zum Betrieb dieses Verfahrens, da mehrere unterschiedliche Abrasivwerkzeuge für einen Bearbeitungsvorgang bevorratet werden müssen.

Hohe Anforderungen an die Qualität der zu bearbeitenden Zahnräder haben dazu geführt, daß leistungsfähige Hartbearbeitungsverfahren benötigt werden. Hinsichtlich des Zahnradhonens wurden Lösungen ins Auge gefaßt, bei denen die beiden Drehachsen von Werkzeug und Werkstück nicht mehr unabhängig voneinander arbeiten und nur durch das Schleppmoment des nicht angetriebenen Teils verbunden sind, sondern bei denen die beiden Drehachsen durch eine definierte Kopplung verbunden sind. Diese wird vorzugsweise unter Zuhilfenahme der NC-Technik elektronisch vorgenommen ("elektronische Welle").

Das Ziel dieser Maßnahme war, die Verzahnungsfehler durch den Honvorgang nicht nur "auszumitteln", also im Rahmen der Abwälzung mit dem - fehlerarmen - Honwerkzeug zu minimieren, sondern definiert durch Zwangskopplung der Drehachsen zu eliminieren.

Umfangreiche Versuche zeigten, daß mit den bekannten Honverfahren tatsächlich gewisse Verzahnungsfehler sehr klein gemacht werden können, namentlich der Rundlauffehler, der Flankenformfehler und der Einzelteilungsfehler der Verzahnung.

Es zeigte sich aber auch, daß insbesondere der Summenteilungsfehler der Verzahnung auch bei Einsatz einer "elektronischen Welle" nach dem Honprozeß noch zu groß ist und in der Regel außerhalb der zulässigen Toleranzen liegt.

Offensichtlich sind die verfügbaren Steuerungen ("elektronische Wellen") wegen der sehr hohen Drehgeschwindigkeit von Werkstück und Honrad nicht in der Lage, Drehfehler, d.h. Abweichungen von der Idealdrehung, die sich nur im Mikrometerbereich bewegen, so rechtzeitig zu erkennen und eine erforderliche Gegenbewegung einzuleiten, daß es zu einer entsprechenden Korrektur im Abrasionsprozeß kommt.

Der vorliegenden Erfindung liegt daher die **Aufgabe** zugrunde, ein neuartiges Verfahren für die Feinbearbeitung von Verzahnungen zu schaffen, das in der Lage ist, auch den kritischen Summenteilungsfehler entscheidend zu verringern und so eine qualitativ hochwertige Verzahnung zu schaffen. Das erfindungsgemäße Ziel soll jedoch unter der Nebenbedingung erreicht werden, daß die Hartbearbeitung in kürzestmöglicher Zeit erfolgt, weshalb von einem Honprozeß ausgegangen wird.

Die **Lösung** der Aufgabe durch die Erfindung ist dadurch gekennzeichnet, daß die Bearbeitung folgende Arbeitsschritte aufweist:
a) Drehung des Zahnrads (1) um mindestens eine vollständige Umdrehung um seine Drehachse, wobei es sich im Eingriff mit dem Abrasivwerkzeug (3) befindet, wobei das Abrasivwerkzeug (3) lastfrei, jedoch in Kontakt zu den Zahnflanken des Zahnrads (1) mitläuft und wobei über die vollständige Umdrehung des Zahnrads (1) die sich infolge vorhandener Verzahnungsfehler ergebenden Drehabweichungen von der Idealdrehung zwischen Zahnrad (1) und Abrasivwerkzeug (3) gemessen und gespeichert werden;
b) Bearbeitung des Zahnrads (1) mit dem Abrasivwerkzeug (3), wobei die Drehbewegung der Drehachse (2) des Zahnrads (1) und die Drehbewegung der Drehachse (4) des Abrasivwerkzeugs (3) nunmehr elektronisch gekoppelt sind und wobei die elektronische Steuerung bei der Kopplung der beiden Drehachsen (2,4) die in Arbeitsschritt a) gemessenen und gespeicherten Drehabweichungen derart berücksichtigt, daß diese jeweils korrespondierend bei der Sollwert-Vorgabe für eine Winkelposition der zu regelnden Drehachse mit umgekehrtem Vorzeichen addiert werden.

Die in Arbeitsschritt a) festgestellten Drehabweichungen des Werkstücks von der Idealdrehung - man könnte es als ein "Teach-in" für die vorhandenen Fehler bezeichnen - werden in Arbeitsschritt b) also derart verwendet, daß die gemessenen Fehler mit anderem Vorzeichen "gegengehalten" werden und so gerade an den Stellen eine besonders hohe Materialabrasion stattfindet, an denen das meiste Material abgetragen werden muß. Das - steuerungstechnische - Mittel der Wahl ist hier die sog. "elektronische Kurvenscheibe", die als elektronisches Achskoppelsystem bereits im Druck-, Papier- und Textilmaschinenbau eingesetzt wird.

Durch die erfindungsgemäßen Kennzeichen wird erreicht, daß auch mit den verfügbaren Steuerungssystemen eine entscheidende Verminderung der Verzahnungsfehler, vor allem des Summenteilungsfehlers, vorgenommen werden kann, da die Steuerung jetzt rechtzeitig "weiß", wann eine fehlerbedingte Abweichung kommt, der "gegengeregelt" werden muß. Das Ergebnis nach dem Honprozeß ist ein einwandfreies Zahnrad, das mit allen Fehlerkriterien innerhalb der zulässigen Toleranz liegt.

Wenn die am meisten kritischen Fehlerstellen - betrachtet über den Umfang des Zahnrades - abgetragen sind, kann es sinnvoll sein, den Honvorgang mit unkorrigierten Winkelpositionen (also mit exakter, unmodifizierter Drehkopplung) fortzusetzen; ansonsten bestünde auch die Gefahr, daß die Korrekturen nunmehr "Löcher" an denjenigen Stellen einbringen könnten, die vorher bevorzugt abgetragen werden mußten. Gemäß eines weiteren Kennzeichens der Erfindung wird also im Anschluß an die Bearbeitung gemäß des Hauptanspruchs eine erneute Vermessung des Werkstücks vorgenommen.

Zeigt es sich, daß die größten Fehler bereits abgetragen sind, wird der Honprozeß mit unkorrigierten Winkelpositionen fortgesetzt; ansonsten kann weiter mit Korrekturwerten gearbeitet werden, wobei jetzt jedoch vorzugsweise die neu ermittelten Werte zugrunde gelegt werden.

Die Abfolge Bearbeiten - Messen - Bearbeiten kann vorteilhafterweise so lange mit korrigierten Winkelpositionen fortgeführt werden, bis die gemessenen Drehabweichungen einen vorgegebenen Wert unterschreiten; dann kann mit unkorrigierten Winkelpositionen (ideale Drehkopplung) weitergearbeitet werden.

Nicht unbedingt erforderlich ist es, festgestellte Abweichungen (nach Arbeitsschritt a) gemäß Anspruch 1 über den gesamten Umfang der Verzahnung zu berücksichtigen, wenn beispielsweise nur an einer oder einigen wenigen Stellen über den Umfang besonders hoher Abtrag gefordert wird, wie dies bei Summenteilungsfehlern von Verzahnungen typisch ist. Als Weiterbildung der Erfindung ist daher vorgesehen, daß die Korrektur der Winkelpositionen der zu regelnden Drehachse auf diejenigen Winkelbereiche beschränkt wird, bei denen die gemessene Abweichung von der Idealdrehung einen festgelegten Wert übersteigt.

Es kann auch angezeigt sein, bei der Ermittlung der Fehler gemäß Arbeitsschritt a) anstelle des Zahnrades (1) das Abrasivwerkzeug (3) zu drehen und das Zahnrad (1) lastfrei, jedoch in Kontakt zu den Zahnflanken des Abrasivwerkzeugs (3) mitlaufen zu lassen. Auch dies ist eine Weiterbildung des erfindungsgemäßen Gegenstands.

Zur Erhöhung der Präzision des Verfahrens kann es sinnvoll sein, die - immer vorhandenen, wenn auch geringen - Fehler des Werkzeugs zu eliminieren. Dies geschieht erfindungsgemäß dadurch, daß die Fehler des Werkzeugs, z.B. auf einer separaten Meßmaschine, gemessen werden. Bei der Berechnung der korrigierten Winkelpositionen, aber auch, wenn ohne Korrekturen drehgekoppelt wird, werden nun die ermittelten Werkzeugfehler "gegengehalten", wodurch der Fehlereinfluß des Werkzeugs eliminiert wird.

In der Zeichnung ist ein Ausführungsbeispiel dargestellt, an dem das erfindungsgemäße Verfahren erläutert werden soll. Es zeigt
- Fig. 1: Werkstück und Werkzeug im Eingriff während des Bearbeitungsprozesses und
- Fig. 2: den Verlauf des Summenteilungsfehlers Fp über dem Drehwinkel des Zahnrades.

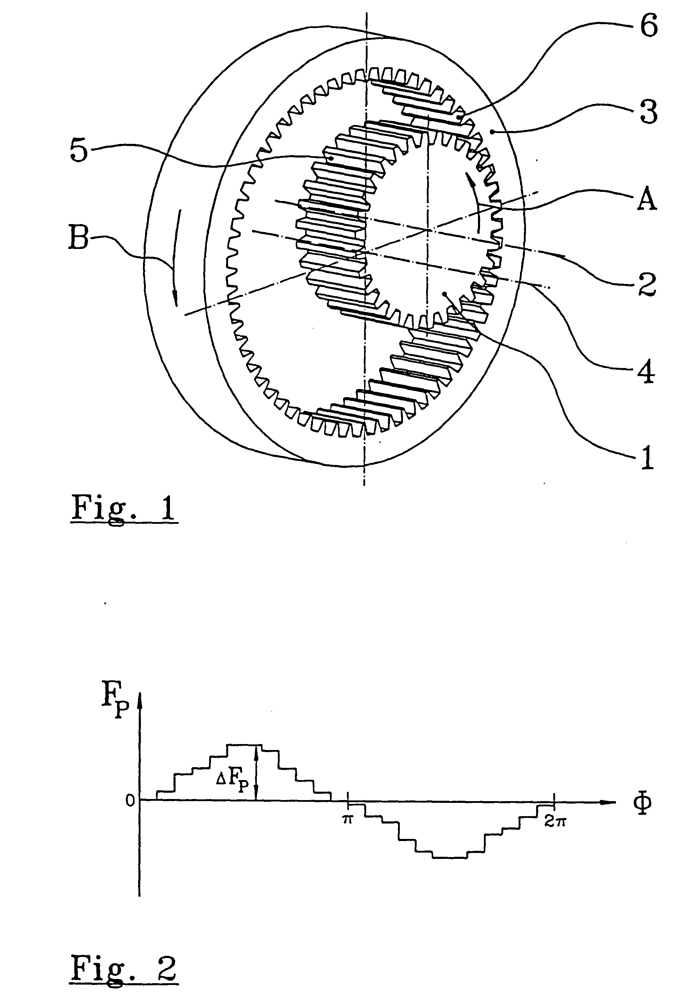

In Figur 1 ist das zu bearbeitende Zahnrad 1 zu erkennen. Es weist eine Drehachse 2 auf, um die es während des Honbearbeitungsprozesses dreht (Drehrichtung A). Das Zahnrad 1 kämmt mit dem Abrasivwerkzeug 3, welches um seine Drehachse 4 drehen kann (Drehrichtung B). Dargestellt ist der - einfachste - Fall der Bearbeitung eines Stirnzahnrades mit parallel zur Drehachse 2 verlaufenden Zähnen (Geradverzahnung). Die erfindungsgemäßen Ausführungen gelten jedoch genauso für Schrägverzahnungen und für zu bearbeitende Innenverzahnungen. Dann hat freilich das Werkzeug die Form eines außenverzahnten Stirnrades (in Fig. 1 würde dann Nr. 1 das Werkzeug und Nr. 3 das Werkstück sein). Die in Fig. 1 der Einfachheit wegen parallel zueinander verlaufend dargestellten Drehachsen 2 und 4 verlaufen üblicherweise unter einem spitzen Winkel, dem sogenannten Achskreuzwinkel, um den gewünschten Spanabtrag zu erzeugen.

Das Abrasivwerkzeug (Honrad) 3 beinhaltet die Gegenkontur des Werkstücks 1; beim Abwälzen von Werkzeug 3 und Werkstück 1 erzeugt das Werkzeug 3 am Werkstück 1 exakt die gewünschte Profilform. Materialabtrag (Abrasion) findet dadurch statt, daß die Kontaktfläche zwischen Werkstück und Werkzeug werkzeugseitig mit Abrasivmaterial versehen ist. Zum Einsatz kann ein Werkzeug kommen, das ganz aus abrichtbarem Schleifmittel besteht und in das z.B. mittels eines diamantbesetzten Lehrenzahnrades, die gewünschte Profilform eingebracht wurde. Das Werkzeug kann aber auch aus einem metallischen Grundköper bestehen, der bereits exakt auf eine äqudistant kleinere Form gefertigt wurde und mit einer einlagigen Schicht aus superhartem Material besteht (z.B. CBN), mit der sich dann die exakte benötigte Werkzeugform ergibt.

Die Drehbewegung der Achsen 2 und 4 (Drehrichtungen A und B) ist elektronisch gekoppelt ("elektronische Welle"); d.h. zu jeder Winkelposition der Werkstückwelle gehört eine zugehörige Winkelposition der Werkzeugwelle, die regelungstechnisch exakt zugeordnet und positioniert wird.

Erfindungsgemäß wird vor der eigentlichen Bearbeitung das zu bearbeitende Zahnrad 1 um eine vollständige Umdrehung gedreht, was automatisch durch die - nicht dargestellte - Maschinensteuerung veranlaßt wird. Das Werkzeug 3 befindet sich gemäß Figur 1 dabei im Eingriff mit dem Werkstück 1; es dreht dabei lastfrei mit, wobei jedoch durch ein geringes Bremsmoment sichergestellt ist, daß Kontakt zwischen den Zahnflanken des Werkstücks 5 und des Werkzeugs 6 besteht (Es kann natürlich im konkreten Fall einfacher sein, daß das Werkzeug 3 angetrieben wird und das Werkstück 1 mitläuft; selbstverständlich ist auch dieser Fall Bestandteil der vorliegenden Erfindung).

Während der Umdrehung des Zahnrads 1 wird am mitlaufenden Werkzeug 3 die Bewegung gemessen und insbesondere die sich infolge vorhandener Verzahnungsfehler des Werkstückes 1 ergebenden Drehabweichungen von der Idealdrehung ermittelt und gespeichert. In Fig. 2 ist dies schematisch skizziert: Über einer vollständigen Umdrehung (2 Pi) ist der jeweils gemessene Summenteilungsfehler Fp bestimmt worden. Jetzt kann für jede Winkelposition ein Korrekturwert (Delta Fp) der Drehkopplung zugrunde gelegt werden, wodurch gerade an denjenigen Stellen erhöhter Materialabtrag stattfindet, die auch am stärksten abgetragen werden müssen.

Anschließend beginnt der Honbearbeitungsprozeß. Die Drehungen von Werkstück 1 und Werkzeug 3 sind nun elektronisch gekoppelt ("elektronische Welle"). Jedoch werden die gemessenen Drehabweichungen (Delta Fp) von der elektronischen Steuerung bei der Kopplung der beiden Drehachsen "gegengehalten"; d.h. daß die Maschinensteuerung für jede konkrete Winkelposition als Sollwert einen um den vorher gemessenen und gespeicherten Fehler korrigierten Wert vorgibt und zum gewünschten Zielwert erklärt.

## Patentansprüche

1. Verfahren für die Feinbearbeitung von Verzahnungen auf einer Werkzeugmaschine,
wobei das zu bearbeitende Zahnrad (1) um seine Drehachse (2) rotiert und sich mit einem Abrasivwerkzeug (3), das um seine Drehachse (4) rotiert, im Eingriff befindet, wodurch es zum Spanabtrag an den zu bearbeitenden Zahnflanken des Zahnrads (1) kommt
und wobei die Drehbewegung der Drehachse (2) des Zahnrads (1) und die Drehbewegung der Drehachse (4) des Abrasivwerkzeugs (3) elektronisch gekoppelt sind,
**dadurch gekennzeichnet**,
daß die Bearbeitung folgende Arbeitsschritte aufweist:
a)
(i) Drehung des Zahnrads (1) um mindestens eine vollständige Umdrehung um seine Drehachse,
(ii) wobei es sich im Eingriff mit dem Abrasivwerkzeug (3) befindet,
(iii) wobei das Abrasivwerkzeug (3) lastfrei, jedoch in Kontakt zu den Zahnflanken des Zahnrads (1) mitläuft und
(iv) wobei über die vollständige Umdrehung des Zahnrads (1) die sich infolge vorhandener Verzahnungsfehler ergebenden Drehabweichungen von der Idealdrehung zwischen Zahnrad (1) und Abrasivwerkzeug (3) gemessen und gespeichert werden;
b)
(i) Bearbeitung des Zahnrads (1) mit dem Abrasivwerkzeug (3),
(ii) wobei die Drehbewegung der Drehachse (2) des Zahnrads (1) und die Drehbewegung der Drehachse (4) des Abrasivwerkzeugs (3) nunmehr elektronisch gekoppelt sind und
(iii) wobei die elektronische Steuerung bei der Kopplung der beiden Drehachsen (2,4) die in Arbeitsschritt a) gemessenen und gespeicherten Drehabweichungen derart berücksichtigt, daß diese jeweils korrespondierend bei der Sollwert-Vorgabe für eine Winkelposition der zu regelnden Drehachse mit umgekehrtem Vorzeichen addiert werden.

2. Verfahren nach Anspruch 1, dadurch gekennzeichnet, daß die Bearbeitung dadurch erweitert wird, daß im Anschluß an die Bearbeitung nach Arbeitsschritt b) gemäß Anspruch 1 eine erneute Messung nach Arbeitsschritt a) gemäß Anspruch 1 durchgeführt wird und die Bearbeitung dann ohne Korrektur der Winkelpositionen fortgesetzt wird, wenn die gemessenen Drehabweichungen von der Idealdrehung einen vorgegebenen Maximalwert unterschreiten, anderenfalls jedoch die Bearbeitung nach Arbeitsschritt b) gemäß Anspruch 1 fortgesetzt wird, wobei vorzugsweise die neu gemessenen Drehabweichungen zugrunde gelegt werden.

3. Verfahren nach Anspruch 2, dadurch gekennzeichnet, daß im Falle dessen, daß die gemessenen Drehabweichungen den vorgegebenen Maximalwert nicht unterschreiten, das Verfahren nach Anspruch 2 solange wiederholt wird, bis dies der Fall ist.

4. Verfahren nach Anspruch 1,2 oder 3, dadurch gekennzeichnet, daß die Korrektur der Winkelpositionen der zu regelnden Drehachse auf diejenigen Winkelbereiche beschränkt wird, bei denen die gemessene Abweichung von der Idealdrehung einen festgelegten Wert übersteigt.

5. Verfahren nach mindestens einem der Ansprüche 1 bis 4, dadurch modifiziert, daß zur Durchführung des Arbeitsschrittes a) gemäß Anspruch 1 das Abrasivwerkzeug (3) gedreht wird, wobei es sich im Eingriff mit dem Zahnrad (1) befindet und wobei das Zahnrad (1) lastfrei, jedoch in Kontakt zu den Zahnflanken des Abrasivwerkzeugs (3) mitläuft.

6. Verfahren nach mindestens einem der Ansprüche 1 bis 5, dadurch gekennzeichnet, daß die im Abrasivwerkzeug (3) vorhandenen Verzahnungsfehler, die vorzugsweise separat auf einer Meßmaschine ermittelt werden, bei der Berechnung der korrigierten Winkelposition und auch bei der Drehkopplung ohne Korrekturwerte im Sinne des Arbeitsschritts b) (iii) gemäß Anspruch 1 berücksichtigt werden.

## Revendications

1. Procédé destiné à l'usinage de précision de dentures sur une machine-outil,
la roue dentée (1) à usiner tournant autour de son axe de rotation (2) et étant en prise avec un outil d'abrasion (3), qui tourne autour de son axe de rotation (4), ce qui conduit à un enlèvement de particules au niveau des flancs des dents à usiner de la roue dentée (1),
et le mouvement de rotation de l'axe de rotation (2) de la roue dentée (1) et le mouvement de rotation de l'axe de rotation (4) de l'outil d'abrasion (3) étant couplés par voie électronique,
caractérisé en ce que
l'usinage comporte les phases de travail suivantes :
a)
(i) rotation de la roue dentée (1) d'un tour complet au moins autour de son axe de rotation, étant précisé que
(ii) celle-ci se trouve en prise avec l'outil d'abrasion (3),
(iii) l'outil d'abrasion (3) tourne sans charge mais en contact avec les flancs des dents de la roue dentée (1), et
(iv) les anomalies de rotation par rapport à la rotation idéale entre la roue dentée (1) et l'outil d'abrasion (3), dues à la présence de défauts de denture, sont mesurées et mémorisées pendant le tour complet de la roue dentée (1) ;
b)
(i) usinage de la roue dentée (1) avec l'outil d'abrasion (3), étant précisé que,
(ii) le mouvement de rotation de l'axe de rotation (2) de la roue dentée (1) et le mouvement de rotation de l'axe de rotation (4) de l'outil d'abrasion (3) sont désormais couplés par voie électronique, et
(iii) la commande électronique tient compte lors du couplage des deux axes de rotation (2, 4) des anomalies de rotation mesurées et mémorisées dans la phase de travail a) de telle sorte que, lors de la prescription de la valeur de consigne pour une position angulaire de l'axe de rotation à régler, celles-ci soient respectivement additionnées de façon correspondante avec un signe inverse.

2. Procédé selon la revendication 1, caractérisé en ce que l'usinage est complété par le fait que, suite à l'usinage selon la phase de travail b) suivant la revendication 1, il est effectué une nouvelle mesure selon la phase de travail a) suivant la revendication 1, et en ce que l'usinage est alors poursuivi sans correction des positions angulaires si les anomalies de rotation mesurées par rapport à la rotation idéale sont inférieures à une valeur maximale prescrite, dans le cas contraire l'usinage selon la phase de travail b) suivant la revendication 1 est poursuivi, mais de préférence sur la base des nouvelles anomalies de rotation mesurées.

3. Procédé selon la revendication 2, caractérisé en ce que, au cas où les anomalies de rotation mesurées ne sont pas inférieures à la valeur maximale prescrite, le procédé suivant la revendication 2 est répété jusqu'à ce que ce soit le cas.

4. Procédé selon les revendications 1, 2 ou 3, caractérisé en ce que la correction des positions angulaires de l'axe de rotation à régler est limitée aux zones angulaires dans lesquelles l'anomalie mesurée par rapport à la rotation idéale dépasse une valeur définie.

5. Procédé selon l'une au moins des revendications 1 à 4, modifié par le fait que, pour la mise en oeuvre de la phase de travail a) suivant la revendication 1, l'outil d'abrasion (3) est tourné, celui-ci se trouvant alors en prise avec la roue dentée (1), et la roue dentée (1) tournant sans charge mais en contact avec les flancs des dents de l'outil d'abrasion (3).

6. Procédé selon l'une au moins des revendications 1 à 5, caractérisé en ce que les défauts de denture existants dans l'outil d'abrasion (3), qui sont de préférence déterminés sur une machine de mesure séparée, sont pris en considération lors du calcul de la position angulaire corrigée, et également lors du couplage de rotation sans valeurs de correction, dans l'esprit de la phase de travail b) (iii) suivant la revendication 1.

## Claims

1. Method of finishing gear-tooth systems on a machine tool, the gear (1) to be machined rotating about its rotation axis (2) and being in engagement with an abrasive tool (3) which rotates about its rotation axis (4), as a result of which chip removal occurs at the tooth flanks of the gear (1) which are to be machined, and the rotary movement of the rotation axis (2) of the gear (1) and the rotary movement of the rotation axis (4) of the abrasive tool (3) being electronically coupled, characterized in that the machining comprises the following working steps:
a)
(i) rotation of the gear (1) by at least one complete revolution about its rotation axis,
(ii) in the course of which it is in engagement with the abrasive tool (3),
(iii) the abrasive tool (3) rotating with the gear (1) in such a way as to be free of load but in contact with the tooth flanks of the gear (1), and
(iv) in the course of which, over the complete revolution of the gear (1), the rotary deviations, resulting from existing gear-tooth errors, from the ideal rotation between gear (1) and abrasive tool (3) are measured and stored;
b)
(i) machining of the gear (1) with the abrasive tool (3),
(ii) the rotary movement of the rotation axis (2) of the gear (1) and the rotary movement of the rotation axis (4) of the abrasive tool (3) now being electronically coupled, and
(iii) the electronic control, during the coupling of the two rotation axes (2, 4), taking into account the rotary deviations measured and stored in working step a) in such a way that these rotary deviations are in each case added with reversed sign in a corresponding manner during the setpoint selection for an angular position of the rotation axis to be regulated.

2. Method according to Claim 1, characterized in that the machining is extended by a measurement being carried out again in accordance with working step a) according to Claim 1 following the machining in accordance with working step b) according to Claim 1, and by the machining being continued without correction of the angular positions when the measured rotary deviations from the ideal rotation fall below a predetermined maximum value, but otherwise the machining is continued in accordance with working step b) according to Claim 1, in which case the rotary deviations measured again are preferably taken as a basis.

3. Method according to Claim 2, characterized in that, in the event of the measured rotary deviations not falling below the predetermined maximum value, the method according to Claim 2 is repeated until this is the case.

4. Method according to Claim 1, 2 or 3, characterized in that the correction of the angular positions of the rotation axis to be regulated is restricted to those angular ranges within which the measured deviation from the ideal rotation exceeds a fixed value.

5. Method according to at least one of Claims 1 to 4, characterized in that, to carry out the working step a) according to Claim 1, the abrasive tool (3) is rotated, in the course of which it is in engagement with the gear (1), and the gear (1) rotates with the abrasive tool (3) in such a way as to be free of load but in contact with the tooth flanks of the abrasive tool (3).

6. Method according to at least one of Claims 1 to 5, characterized in that the gear-tooth errors which are present in the abrasive tool (3) and which are preferably separately determined on a measuring machine are taken into account in accordance with the working step b) (iii) according to Claim 1 when calculating the corrected angular position and also during the rotary coupling without correction values.
